# EUROPEAN PATENT SPECIFICATION

(11) **EP 1 438 315 B1**
(45) Date of publication and mention of the grant of the patent: **27.09.2006**
(21) Application number: 02772548.0
(22) Date of filing: 25.10.2002
(51) Int. Cl.: C07F 7/00, C07F 5/00, C23C 16/18, C23C 16/40, C07C 31/28

(54) **IMPROVED PRECURSORS FOR CHEMICAL VAPOUR DEPOSITION**
VORLAEUFERVERBINDUNGEN FÜR CHEMISCHE DAMPFPHASENABSCHEIDUNG
PRECURSEURS AMELIORES POUR DEPOT CHIMIQUE EN PHASE VAPEUR

(30) Priority: 26.10.2001 GB 0125724; 04.12.2001 GB 0129080
(43) Date of publication of application: 21.07.2004
(73) Proprietor: EPICHEM LIMITED, Wirral, Merseyside CH62 3QF (GB)
(72) Inventor: JONES, Anthony Copeland, Prescot, Merseyside L35 7JW (GB)
(74) Representative: Lees, Kate Jane
(86) International application number: PCT/GB2002/004822
(87) International publication number: WO 2003/035926

(56) References cited:
- EP-A- 0 614 867
- WO-A1-95/14698
- CHEMICAL ABSTRACTS, vol. 80, no. 23, 10 June 1974 (1974-06-10) Columbus, Ohio, US; abstract no. 132732, BHARARA, P. C. ET AL: "Reactions of titanium alkoxides with (methylamino) alcohols" XP002236947 & ZEITSCHRIFT FUER ANORGANISCHE UND ALLGEMEINE CHEMIE (1974), 403(3), 337-4 , 1974,
- DATABASE CA [Online] CHEMICAL ABSTRACTS SERVICE, COLUMBUS, OHIO, US; ONOSAWA, KAZUHISA ET AL: "Source material for CVD and deposition of thin film using the source material" retrieved from STN Database accession no. 136:239948 CA XP002236948 & JP 2002 069641 A (ASAHI DENKA KOGYO K. K., JAPAN) 8 March 2002 (2002-03-08)

## Description

This invention concerns precursors for chemical vapour deposition. This invention is particularly, but not exclusively concerned with precursors for the growth of zirconium oxide (ZrO₂), hafnium oxide (HfO₂), zirconium oxide/silicon oxide (ZSO) and hafnium oxide/silicon oxide (HSO) by chemical vapour deposition.

Thin films of ZrO₂ and HfO₂ and the related silicates ZSO and HSO have important technological applications. In particular, they have high permittivities and are relatively stable in contact with silicon, making them the prime candidates to replace SiO₂ as gate dielectric layers in next-generation MOSFET devices in integrated Si circuits. Metalorganic chemical vapour deposition (MOCVD) is an attractive technique for the deposition of these materials, offering the potential for large area growth, good composition control and film uniformity, and excellent conformal step coverage at device dimensions less than 2µm, which is particularly important in microelectronics applications.

An essential requirement for a successful MOCVD process is the availability of precursors with the appropriate physical properties for vapour phase transport and a suitable reactivity for deposition. There must be an adequate temperature window between evaporation and decomposition, and for most electronics applications oxide deposition is restricted to temperatures in the region of 500°C, to prevent degradation of the underlying silicon circuitry and metal interconnects.

There are a number of problems associated with existing Zr and Hf CVD precursors. For instance, the halides ZrCl₄ and HfCl₄ are low volatility solids which need substrate temperatures of 800°C and above for oxide deposition. Metal β-diketonates, such as [Zr(thd)₄] (thd = 2,2,6,6-tetramethylheptane-3,5-dionate) also require high substrate temperatures (> 600°C) for oxide growth. These are incompatible with the requirements of the electronics industry. Metal alkoxides are more attractive CVD precursors as they allow lower deposition temperatures. However, the majority of [Zr(OR)₄] and [Hf(OR)₄] complexes are dimeric or polymeric with limited volatility, due to the pronounced tendency of the Zr(IV) and Hf(IV) to expand their coordination sphere to six, seven or eight. In order to inhibit oligomerisation, sterically demanding ligands such as *tert*-butoxide have been employed, and [Zr(OBu^{t})₄] (D.C. Bradley, Chem. Rev. 1989, 89, 1317) and [Hf(OBu^{t})₄] (S. Pakswer & P Skoug, in " Thin dielectric oxide films made by oxygen assisted pyrolysis of alkoxides", The Electrochem. Soc., Los Angeles, CA, USA, 1970, 619 - 636) have been successfully used for the CVD of ZrO₂ and HfO₂. However, these mononuclear precursors contain unsaturated four-coordinate metal centres and the *tert-*butoxide ligand undergoes a catalytic decomposition reaction in the presence of trace water. This makes them highly air and moisture sensitive and susceptible to pre-reaction in the CVD reactor. Their reactivity also leads to a greatly reduced shelf life, especially in solution-based liquid injection CVD applications.

EP-A-0 614 867 describes volatile complex metal compounds of the general formula M[O-CR₁R₂CH₂-O-CH₃]ₙ wherein R₁ and R₂ independently of one another are methyl or a completely fluorinated alkyl group having 1 to 9 carbon atoms, M is a metal or semimetal such as calcium, lead, copper, tin, aluminium, thallium, chromium, iron, uranium and thorium and the valency n of the metal or semi metal is 1, 2, 3 or 4.

Database CA[Online] Database accession no. 136:239948 relates to a raw material for chemical vapour deposition comprising a metallic compound having the following general formula: 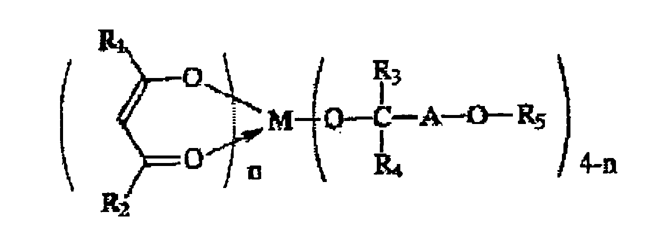 wherein M is titanium, zirconium or hafnium, R₁, R₂ and R₅ are C1 - C8 alkyl having optional 1-2 O atoms, R₃, R₄ are H, C1-4 alkyl, A = C1-4 alkylene, n = 0, 1, 3 for M = Ti and n = 0, 1, 2, 3 for M = Zr or Hf.

An object of this invention is to provide stable and volatile Ti, Zr and Hf precursors suitable for use in chemical vapour deposition techniques.

It has been surprisingly found that the donor functionalised alkoxy ligand 1-methoxy-2-methyl-2-propanolate [OCMe₂CH₂OMe, mmp] is effective in inhibiting oligomerisation in Zr and Hf alkoxide complexes, as well as increasing the ambient stability of the complexes.

Accordingly the present invention provides precursors having the following general formula:

M(L)₂[OCR¹(R²)CH₂X]₂

wherein M is a metal selected from Ti, Zr and Hf, L is an alkoxy ligand having 1 to 4 carbon atoms R¹ is hydrogen or an alkyl group having 1 to 4 carbon atoms, R² is an optionally substituted alkyl group having 1 to 4 carbon atoms and X is OR, wherein R is an alkyl group or a substituted alkyl group.

The ligand L is an alkoxy group having from 1 to 4 carbon atoms, of which tertiary-butoxide (OBu^{t}) group is most preferred, although other groups such as iso-propoxide (OPrⁱ) can be employed.

The preferred ligand of the formula OCR¹(R²)CH₂X is 1-methoxy-2-methyl-2-propanolate (mmp) but other donor functionalised alkoxide ligands may also carry out the desirable function of inhibiting oligomerisation in Zr, Hf and Ti alkoxides for use in the invention. These include but are not limited to OCH(Me)CH₂OMe, OCEt₂CH₂OMe, OCH(Bu^{t})CH₂OEt, OC(Bu^{t})₂CH₂OEt, OC(Prⁱ)₂CH₂OEt, OC(Prⁱ)₂CH₂OC₂H₄OMe and OC(Bu^{t})(CH₂OPⁱ)₂.

The invention further provides a method of making Ti, Zr and Hf precursors for use in MOCVD techniques comprising reacting mmpH with the corresponding metal alkoxide in appropriate molar proportions.

The new alkoxide complexes Zr(OBu^{t})2(mmp)₂ and Hf(OBu^{t})₂(mmp)₂ have been synthesised by the addition of mmpH to Zr(OBu^{t})₄ and Hf(OBu^{t})₄ in appropriate molar proportions. The complexes have high vapour pressures suitable for MOCVD, and are also much less reactive to air and moisture than Zr(OR)₄ compounds, wherein R is an alkyl group, making them easier to handle and use in MOCVD. The reduced air-sensitivity of these new Zr and Hf complexes arises from the replacement of the highly moisture sensitive *tert-*butoxide groups in [Zr(OBu^{t})₄] and [Hf(OBu^{t})₄] with the mmp ligand, which is much less susceptible to hydrolysis. The complexes are further stabilised to hydrolysis by an increase in the coordination number of the central Zr or Hf atom.

According to a second preferred embodiment the invention can be extended to other metals, which have large atomic radii and are highly positively charged, such as lanthanum, in which case the precursors have the following general formula

La[OCR¹(R²)CH₂X]₃

wherein R¹ is H or an alkyl group, R² is an optionally substituted alkyl group and X is selected from OR and NR₂, wherein R is an alkyl group or a substituted alkyl group. WO 95/14698 discloses Lanthanide adducts useful in the field of MOCVD.

The preferred ligand for this preferred embodiment of the invention is 1-methoxy-2-methyl-2-propanolate [OCMe₂CH₂OMe], although other donor functionalised alkoxide ligands may be used. These may include but are not limited to OCH(Me)CH₂OMe, OCEt₂CH₂OMe, OCH(Bu^{t})CH₂OEt, OC(Bu^{t})₂CH₂OEt, OC(Prⁱ)₂CH₂OEt, OCH(Bu^{t})CH₂NEt₂, OC(Prⁱ)₂CH₂OC₂H₄OMe and OC(Bu^{t})(CH₂OPrⁱ)₂.

The invention also provides a preferred method of making precursors according to the second preferred embodiment comprising reacting mmpH with La{N(SiMe₃)₂}₃ in appropriate molar proportions.

Precursors according to the invention may be used in depositing single or mixed oxide layers or films by conventional MOCVD, in which the precursor is contained in a metalorganic bubbler, or by liquid injection MOCVD, in which the precursor is dissolved in an appropriate inert organic solvent and then evaporated into the vapour phase using a heated evaporator. The precursors may also be suitable for use in the deposition of zirconium oxide, hafnium oxide and titanium oxide films by other chemical vapour deposition techniques, such as atomic layer deposition (ALD).

The precursors can be used for the MOCVD of ZrO₂, HfO₂ and TiO₂, and La₂O₃, and in combination with other precursors for the MOCVD of complex oxides containing zirconium oxide, hafnium oxide, and lanthanum oxide such as ZSO and HSO and La-silicate.

The precursors can also be used in combination for the MOCVD of complex oxides. Examples include the MOCVD of bismuth-titanate from the combinations Bi(mmp)₃ / Ti(OPrⁱ)₂(mmp)₂ or Bi(mmp)₃ / Ti(mmp)₄.

The invention wiii now be further described with reference to the accompanying drawings, in which:
Figure 1 shows an envisaged structure for M(OBu^{t})₂(mmp)₂ (M = Zr or Hf);
Figure 2 shows the molecular structure of Hf(mmp)₄. Zr(mmp)₄ has a similar structure; and
Figure 3 shows laser Raman spectra ZrO₂ and HfO₂ films grown by liquid injection MOCVD using Zr(OBu^{t})₂(mmp)₂ or Hf(OBu^{t})₂(mmp)₂.

The invention will now be further described by means of the following

### Examples.

### Example 1

### Preparation of Zr(OBu^{t})₂(mmp)₂

2.8 ml (2.69 g, 7.0 mmol) Zr(OBu^{t})₄ was dissolved in hexane (ca. 40 ml). mmpH (1.6 ml, 1.44 g, 13.9 mmol) was added dropwise, the mixture was heated to reflux and stirring continued for a further 2 hours. The solution was cooled to room temperature and the volatiles removed by evaporation under reduced pressure. The product was recrystallised from hexane to give a white crystalline solid.
**M.pt.:** 96 - 101 °C (uncorrected)
Microanalysis: Calc. C: 48.71, H: 9.10. Found: C: 46.32, H: 8.77%
^{**1**}**H NMR:** (400MHz, d₈-tol) 1.19 (s, 12H, OC(C*H*₃)₂CH₂OCH₃), 1.37 (s, 18H, OC(C*H*₃)₃), 3.23 (s, 4H, OC(CH₃)₂C*H*_{*2*}CH₃), 3.40 (s, 6H, OC(CH₃)₂CH₂OC*H*₃).
^{**13**}**C NMR:** 34.1 (OC(C*H*₃)₂CH₂OCH₃), 38.5 (OC(*CH*_{*3*})₃), 65.4 (OC(CH₃)₂CH₂O*CH*₃), 78.6 (O*C*(CH₃)₂CH₂OCH₃ and O*C*(CH₃)₃), 90.5 (OC(CH₃)₂*C*H₂OCH₃).
**IR:** (υ cm⁻¹, Nujol, NaCl) 3588(w), 3442(w), 2725(m), 2360(w), 1356(s), 1277(m), 1227(m), 1206(s), 1177(s), 1115(s), 1080(s), 1012(s), 974(s), 936(s), 801 (s), 782(s), 595(s).

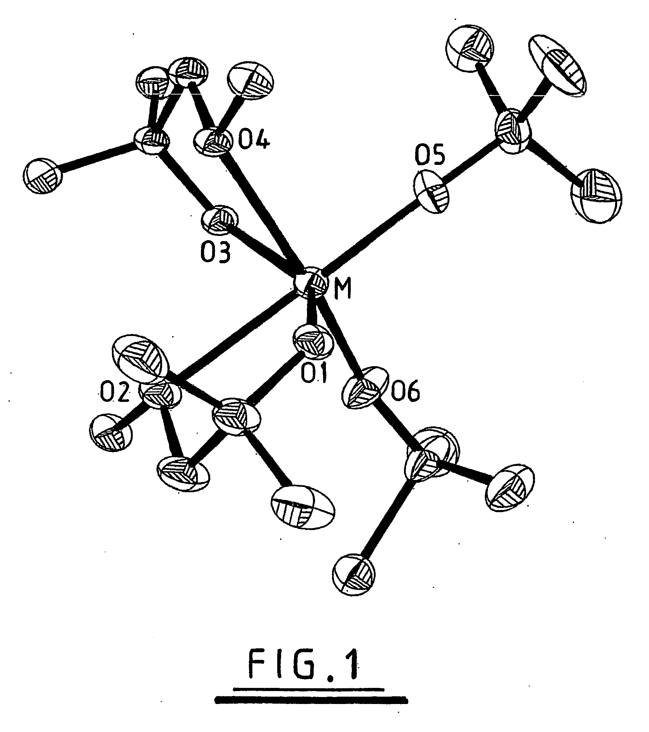

An envisaged structure for Zr(OBu^{t})₂(mmp)₂ is shown in Figure 1 of the drawings.

### Example 2

### Preparation of Zr(mmp)₄

2.0 g (5.2 mmol) Zr(OPrⁱ)₄•PrⁱOH was dissolved in hexane (ca. 40 ml). mmpH (2.6 ml, 2.35 g, 22.5 mmol) was added dropwise, the mixture heated to reflux and stirring was continued for 2 hours. The mixture cooled to room temperature and the volatiles was removed by evaporation under reduced pressure to give the product as a white viscous oil. (Yield: 2.4 g, 94%).

Zr(mmp)₄ can also be synthesised from the corresponding zirconium alkylamide complexes, Zr(NR₂)₄. For instance, by the dropwise addition of mmpH (6.9g, 65.8 mmol) to a stirred solution of [Zr(NEt₂)₄] ( 5.0g, 13.2 mmol) in hexane (50 cm³). The mixture was boiled under reflux for 2 hr. and then allowed to cool to room temperature. Volatiles were removed *in vacuo* to give the product (yield 6.25 g, 94%).
**Microanalysis:** Calc. C: 47.67, H: 8.82 Found: C:47.80, H: 8.79%.
^{**1**}**H NMR:** (400 MHz, d₈-tol): 1.21 (s, OC(C*H*₃)₂CH₂OCH₃), 3.16 (s, OC(CH₃)₂C*H*₂OCH₃), 3.27 (s, OC(CH₃)₂CH₂OC*H*₃)
^{**13**}**C NMR:** (100 MHz, d₈-tol): 32.1 (OC(C*H*₃)₂CH₂OCH₃), 64.8 (OC(CH₃)₂CH₂OC*H*₃), 76.0 (O*C*(CH₃)₂CH₂OCH₃), 88.5 (OC(CH₃)₂C*H*₂OCH₃).
**IR:** (υ cm⁻¹, Nujol, NaCl) 3589(w), 3448(w,br), 2724(m), 2346(w), 1377(s), 1322(m), 1279(m), 1239(m), 1176(s), 1134(m), 1114(s), 1081 (m), 1018(s), 996(m), 982(s), 958(m), 937(m), 917(m), 845(m), 804(m), 784(m), 594(s).

### Example 3

### Preparation of Hf(OBu^{t})₂(mmp)₂

3.5 ml (4.0 g, 8.5 mmol) Hf(OBu^{t})₄ was dissolved in hexane (ca. 40 ml) to give a yellow solution. MmpH (2.0 ml, 1.79 g, 19.0 mmol) was added dropwise, the mixture heated to reflux and stirring continued for 2 hours. The solution was allowed to cool and the volatiles removed by boiling under reduced pressure. The crude product was recrystallised from hexane to give a white crystalline solid.
(Yield: 4.4 g, 97%).
**M. Pt:** 100 - 104 ° C (uncorrected)
**Microanalysis:** Calc. C: 40.71, H: 7.61. Found. C: 38.93, H: 7.30%
^{**1**}**H NMR:** (400 MHz, d₈-tol): δ = 1.18 (s, 12H, OC(C*H*₃)₂CH₂OCH₃), 1.38 (s, 18H, OC(C*H*₃)₃), 3.21 (s, 12H, OC(CH₃)₂*CH*₂OCH₃), 3.42 (s, 12H, OC(CH₃)₂CH₂O*CH*₃)
^{**13**}**C NMR: (100** MHz d₈-tol): δ = 34.4 (OC(*C*H₃)₂CH₂OCH₃), 38.6 (OC(*CH*₃)₃), 65.7, (OC(CH₃)₂CH₂O*CH*₃), 78.0, 79.1 (O*C*(CH₃)₂CH₂OCH₃ and O*C*(CH₃)₃), 90.9 (OC(CH₃)₂C*H*₂OCH₃),
**IR**: (υ cm⁻¹, Nujol, NaCl): 3441 (w), 2726(m), 2256(w), 1272(s), 1177(s), 1074(s), 1016(s), 976(s), 802(s), 782(s), 593(s).

An envisaged structure for Hf(OBu^{t})₂(mmp)₂ is shown in Figure 1 of the drawings.

### Example 4

### Preparation of Hf(mmp)₄

4.0 ml (5.56 g, 11.9 mmol) [Hf(NEt₂)₄] was dissolved in hexane (60 ml). Hmmp (7.0 ml, 6.3 g, 60 mmol) was added dropwise and the mixture refluxed for 90 mins. Volatiles were removed in vacuo to give the product as a yellow viscous oil.
(Yield: 6.88 g, 97.5 %).
**Microanalysis:** Calc. C: 40.63, H: 7.52. Found. C39.85, H 7.32%
^{**1**}**H NMR:** 1.30 (s, 24H, OC(C*H*₃)₂CH₂OCH₃), 3.28 (s, 8H, OC(CH₃)₂C*H*₂OCH₃), 3.36 (s; 12H, OC(CH₃)₂CH₂OC*H*₃)
^{**13**}**C NMR:** 34.74 (OC(*C*H₃)₂CH₂OCH₃), 65.16 (OC(CH₃)₂CH₂O*C*H₃), 79.83 (OC(CH₃)₂CH₂OCH₃), 90.25 (OC(CH₃)₂*C*H₂OCH₃)
**IR:** (Nujol/NaCl): 3585(w), 3450(w,br), 2722(m), 1366(s), 1356(vs), 1268(s), 1242(s), 1214(vs), 1177(vs), 1115(vs), 1079(vs), 1045(vs), 1026(vs), 996(vs), 975(vs), 936(vs), 912(m), 802(s), 779(s), 594(vs).

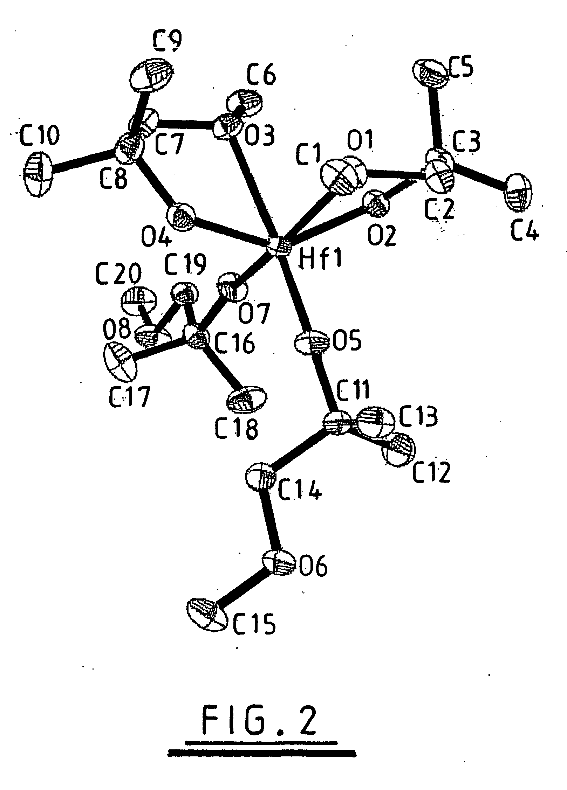

An envisaged structure for Hf(mmp)₄ is shown in Figure 2 of the accompanying drawings.

### Example 5

### Preparation of Zr(OPrⁱ)₂(mmp)₂

1.06 g (2.75 mmol) Zr(OPrⁱ)₄•PrⁱOH was dissolved in hexane (ca 40 ml). 1-methoxy-2-methyl-2-propanol [mmpH] (0.65 ml, 0.57 g, 5.5 mmol) was added dropwise, the mixture was heated to reflux and stirring continued for a further 2 hours. The solution was cooled to room temperature and the volatiles removed by evaporation under reduced pressure. The product was isolated as a white viscous oil.
**Microanalysis:** Calc. C: 46.23, H: 8.73. Found: C: 44.17, H: 8.47
^{**1**}**H NMR** (400MHz, d₈-tol): 1.26 (s, OC(C*H*₃)₂CH₂OCH₃), 1.32 (d, OCH(C*H*₃)₂), 3.26 (2, OC(CH₃)₂C*H*₂OCH₃), 3.36 (s, OC(CH₃)₂CH₂OC*H*₃), 4.46 (m, OC*H*(CH₃)₂).
^{**13**}**C NMR** (100MHz, d₈-tol): 32.1 (OC(*C*H₃)₂CH₂OCH₃), 34.2 (OCH(*C*H₃)₂), 64.9 (OC(CH₃)₂CH₂O*C*H₃), 76.1, 76.4 (O*CH*(CH₃)₂ and OC(CH₃)₂CH₂OCH₃), 88.6 (OC(CH₃)₂*CH*₂OCH₃).
**IR:** (υ cm⁻¹, Nujol, NaCl) 3589(w), 3423(w), 2724(w), 2282(w), 1239(w), 1175(m), 1115(m), 1019(m), 959(m).

### Example 6

### Preparation of Ti(OPrⁱ)₂(mmp)₂

MmpH (2.81 g, 27mmol) was added dropwise to 0.0135moles) to a stirred solution of Ti(OPrⁱ)₄ (3.84g, 13.5mmol) in hexane (20 ml). The mixture was boiled under reflux for 1½ hours and was then allowed to cool. The solvent was then removed *in vacuo* to give Ti(OPrⁱ)₂(mmp)₂ as a colourless oil.
**Microanalysis** for **TiC**_{**16**}**H**_{**36**}**O**_{**4**} **:** (calculated) C% 51.61, H% 9.75; (experimental) C% 51.20, H% 9.92.
^{**1**}**H NMR** (C₆D₅CD₃ at 30°C) δ **1.1** (26H, d, (C*H*₃)₂CH; CH₃OCH₂(C*H*₃)₂C); δ **3.2** (10H, two singlets, C*H*₃OC*H*₂(CH₃)₂C); δ **4.5** (2H, m, (CH₃)₂C*H*).
^{**13**}**C{**^{**1**}**H} NMR (C**_{**6**}**D**_{**5**}**CD**_{**3**}**, 30°C): 32** (OC(*C*H₃)₂CH₂OCH₃), **33.4** (OCH(*C*H₃)₂), **64.4** (OC(CH₃)₂CH₂O*C*H₃), **81.7** (OC(CH₃)₂CH₂OCH₃ **86.5** (OCH(CH₃)₂), **88** (OC(CH₃)₂*C*H₂OCH₃).
**IR** (Nujol, cm⁻¹) 2972s, 2928s, 2869s, 2625w, 1463m, 1376m, 1360s, 1331 m, 1277m, 1126s, 1001s, 850s, 778m., 629s.

### Example 7

### Preparation of Ti(mmp)₄

MmpH (4.41 g, 42 mmol) was added dropwise to a stirred solution of Ti(NEt₂)₄ (2.85g; 3ml; 8.47mmole) in hexane (20 ml) resulting in pale brown solution. The mixture was boiled under reflux for 1½ hours, allowed to cool, and then volatiles were removed *in vacuo* to give Ti (mmp)₄ as a pale brown oil.
**Microanalysis** for **TiC**_{**20**}**H**_{**44**}**O**_{**8**} **:** (calculated) C% 52.17, H% 9.63; (experimental) C% 51.95, H% 9.97.
^{**1**}**H NMR (C**_{**6**}**D**_{**5**}**CD**_{**3**} **at 30°C)** δ **1.3** (24H, s, CH₃OCH₂(C*H*₃)₂C ); δ **3.2** ( 20H, two singlets, CHaOC*H*₂(CH₃)₂C). VT ¹H NMR showed sharp distinct peaks from -50 to +50 °C - no broadening was apparent.
^{**13**}**C{**^{**1**}**H} NMR (C**_{**6**}**D**_{**5**}**CD**_{**3**}**, 30°C): 31.9** (OC(*C*H_{*3*})₂CH₂OCH₃), **64.5** (OC(CH₃)₂CH₂O*C*H₃), **81.7** (O*C*(CH₃)₂CH₂OCH₃), **87** (OC(CH₃)₂*C*H₂OCH₃).
**IR** (Nujol, cm⁻¹) 2975s, 2931s, 2876s, 2829m, 2625w, 1461m, 1360s, 1331m, 1277m, 12406m, 1116s, 1004s, 850m., 796s, 775s, 625s.

### Example 8

### Preparation of La(mmp)₃

[La{N(SiMe₃)₂}₃] (2.89 g, 4.6 mmol) was dissolved in toluene (50 ml) and mmpH (2.2 ml, 1.96 g, 18.7 mmol) added dropwise under stirring. Stirring was continued at room temperature for a further 21 hours and the volatiles removed *in vacuo* to give the product as a brown viscous oii (Yieid = 1.8 g , 87% with respect to La)
**Microanalysis** for **LaC**_{**15**}**H**_{**33**}**O**_{**6**}(calculated) C % 40.18, H % 7.43; (experimental) C % 40.01, H % 7.38

### Example 9

### Zirconium oxide and hafnium oxide deposition from Zr(OBu^{t})₂(mmp)₂, Zr(mmp)₄, Hf(OBu^{t})₂(mmp)₂ and Hf(mmp)₄

All four complexes were found to be excellent precursors for the deposition of ZrO₂ and HfO₂ thin films by MOCVD. The ZrO₂ and HfO₂ films were deposited by liquid injection MOCVD using the same general conditions shown in Table 1 below.

### Table 1

### Growth conditions used for the growth of ZrO₂ or HfO₂ thin films by liquid injection MOCVD using Zr(OBu^{t})₂(mmp)₂, Zr(mmp)₄, Hf(OBu^{t})₂(mmp)₄ or Hf(mmp)₄

| | |
|---|---|
| Substrate temperature | 350-650 °C |
| Reactor pressure | 20-30 mbar |
| Precursor solution concentration | 0.1 M in toluene |
| Precursor solution injection rate | 4 - 8 cm³ hr⁻¹ |
| Evaporator temperature | 130-150°C |
| Argon carrier gas flow rate | 400 - 600 cm³ min⁻¹ |
| Oxygen flow rate | 100 -150 cm³ min⁻¹ |
| Substrates | Si(100) |
| Oxide growth rate | 0.35 - 0.50 µm hr⁻¹ |

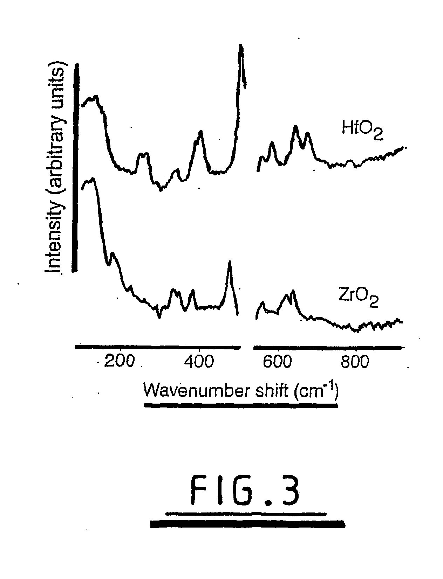

The identity of the films was confirmed as ZrO₂ or HfO₂ by laser Raman spectroscopy (see Figure 3). Raman spectra of ZrO₂ and HfO₂ films grown from Zr(OBu^{t})₂(mmp)₂ or Hf(OBu^{t})₂(mmp)₂ are shown in Fig. 3. Comparison with bulk crystalline data showed that these films were predominantly in the α-or monoclinic phase.

## Claims

1. A precursor for use in MOCVD techniques having the following general formula:
M(L)₂[OCR¹(R²)CH₂X]₂
wherein M is a metal selected from Ti, Zr and Hf, L is an alkoxy ligand having 1 to 4 carbon atoms, R¹ is hydrogen or an alkyl group having 1 to 4 carbon atoms, R² is an optionally substituted alkyl group having 1 to 4 carbon atoms and X is OR, wherein R is an alkyl group or a substituted alkyl group.

2. A precursor as claimed in claim 1, wherein the ligand L is selected from tertiary-butoxide and iso-propoxide.

3. A precursor as claimed in claim 1 or 2, wherein the ligand of the formula OCR¹(R²)CH₂X is 1-methoxy-2-methyl-2-propanolate.

4. A precursor as claimed in claim 1, wherein the ligand of the formula OCR¹(R²)CH₂X is selected from OCH(Me)CH₂OMe, OCEt₂CH₂OMe, OCH(Bu^{t})CH₂OEt, OC(BU^{t})₂CH₂OEt, OC(Prⁱ)₂CH₂OEt.

5. A precursor as claimed in claim 1 of formula Zr(OBu^{t})₂(mmp)₂.

6. A precursor as claimed in claim 1 of formula Hf(OBU^{t})₂(mmp)₂.

7. A method of making Ti, Zr and Hf precursors according to claim 1 for use in MOCVD techniques comprising reacting HOCR¹(R²)CH₂X, wherein R¹, R², and X are as defined above with the corresponding metal alkoxide in appropriate molar proportions.

8. A precursor for use in MOCVD techniques having the following general formula
La[OCR¹(R²)CH₂X]₃
wherein R¹ is H or an alkyl group, R² is an optionally substituted alkyl group and X is selected from OR and NR₂, wherein R is an alkyl group or a substituted alkyl group.

9. A precursor as claimed in claim 8, wherein the ligand is 1-methoxy-2-methyl-2-propanolate [OCMe₂CH₂OMe].

10. A precursor as claimed in claim 8, wherein the ligand is selected from OCH(Me)CH₂OMe, OCEt₂CH₂OMe, OCH(Bu^{t})CH₂OEt, OC(Bu^{t})₂CH₂OEt, OC(Prⁱ)₂CH₂OEt, OCH(Bu^{t})CH₂NEt₂, OC(Prⁱ)₂CH₂OC₂H₄OMe and OC(Bu^{t})(CH₂OPrⁱ)₂.

11. A precursor of the formula La[mmp]₃.

12. A method of making precursors as claimed in claim 8 comprising reacting HOCR¹(R²)CH₂X with La{N(SiMe₃)₂}₃ in appropriate molar proportions.

13. A method of depositing single or mixed oxide layers or films by conventional MOCVD, in which the precursor is contained in a metalorganic bubbler, or by liquid injection MOCVD, in which the precursor is dissolved in an appropriate inert organic solvent and then evaporated into the vapour phase using a heated evaporator, wherein at least one of the precursors is as defined in any one of claims 1 to 6 or 8 to 11.

## Patentansprüche

1. Vorstufe zur Verwendung in MOCVD-Techniken, der die allgemeine Formel aufweist:
M(L)₂[OCR¹(R²)CH₂X]₂
wobei M ein Metall ist, das ausgewählt ist aus Ti, Zr und Hf, L ein Alkoxy-Ligand ist, der 1 bis 4 Kohlenstoffatome aufweist, R¹ ein Wasserstoff oder eine Alkylgruppe ist, die 1 bis 4 Kohlenstoffatome aufweist, R² eine optional substituierte Alkylgruppe ist, die 1 bis 4 Kohlenstoffatome aufweist und X ist OR, wobei R eine Alkylgruppe oder eine substituierte Alkylgruppe ist.

2. Vorstufe gemäß Anspruch 1, wobei der Ligand L ausgewählt ist aus tertiärem Butoxid und iso-propoxid.

3. Vorstufe gemäß Anspruch 1 oder 2, wobei der Ligand der Formel OCR¹(R²)CH₂X 1-Methoxy-2-methyl-2-propanolat ist.

4. Vorstufe gemäß Anspruch 1, wobei der Ligand der Formel OCR¹(R²)CH₂X ausgewählt ist aus OCH(Me)CH₂OMe, OCEt₂CH₂OMe, OCH(Bu^{t})CH₂OEt, OC(Bu^{t})₂CH₂OEt, OC(Prⁱ)₂CH₂OEt.

5. Vorstufe gemäß Anspruch 1 der Formel Zr(OBu^{t})₂(mmp)₂.

6. Vorstufe gemäß Anspruch 1 der Formel Hf(OBu^{t})₂(mmp)₂.

7. Verfahren zur Herstellung von Ti-, Zr- und Hf-Vorstufen gemäß Anspruch 1 zur Verwendung in MOCVD-Techniken, das Reagieren von HOCR¹(R²)CH₂X umfasst, wobei R⁴, R² und X wie oben definiert sind mit dem entsprechenden Metallalkoxid in geeigneten Molverhältnissen.

8. Vorstufe zur Verwendung in MOCVD-Techniken, der die allgemeine Formel
La[OCR¹(R²)CH₂X]₃
aufweist, wobei R¹ H oder eine Alkylgruppe ist, R² eine optional substituierte Alkylgruppe ist, und X ausgewählt ist aus OR und NR₂, wobei R eine Alkylgruppe oder eine substituierte Alkylgruppe ist.

9. Vorstufe gemäß Anspruch 8, wobei der Ligand 1-Methoxy-2-methyl-2-propanolat [OCMe₂CH₂OMe] ist.

10. Vorstufe gemäß Anspruch 8, wobei der Ligand ausgewählt ist aus OCH(Me)CH₂OMe, OCEt₂CH₂OMe, OCH(Bu^{t})CH₂OEt, OC(Bu^{t})₂CH₂OEt, OC(Prⁱ)₂CH₂OEt, OCH(Bu^{t})CH₂NEt₂, OC(Prⁱ)₂CH₂OC₂H₄OMe und OC(Bu^{t})(CH₂OPrⁱ)₂.

11. Vorstufe der Formel La[mmp]₃.

12. Verfahren zur Herstellung von Vorstufen gemäß Anspruch 8, das Reaktion von HOCR¹(R²)CH₂X mit La{N(SiMe₃)₂}₃ in geeigneten molaren Verhältnissen umfasst.

13. Verfahren zur Aufbringung von Ein- oder Mischoxidschichten oder -überzügen durch herkömmliche MOCVD, bei der die Vorstufe in einem metallorganischen Gasspüler enthalten ist, oder durch Flüssigkeitsinjektions-MOCVD, bei der die Vorstufe in einem geeigneten inerten organischen Lösungsmittel gelöst wird und dann unter Verwendung eines beheizten Verdampfers in die Dampfphase verdampft wird, wobei wenigstens einer der Vorstufen wie in irgendeinem der Ansprüche 1 bis 6 oder 8 bis 11 definiert ist.

## Revendications

1. Précurseur pour utilisation dans des techniques de MOCVD ayant la formule générale suivante :
M(L)₂[OCR¹(R²)CH₂X]₂
dans laquelle M est un métal choisi parmi Ti, Zr et Hf, L est un ligand alcoxy ayant de 1 à 4 atomes de carbone, R¹ est l'hydrogène ou un groupe alkyle ayant de 1 à 4 atomes de carbone, R² est un groupe alkyle facultativement substitué ayant de 1 à 4 atomes de carbone, et X est OR, dans lequel R est un groupe alkyle ou un groupe alkyle substitué.

2. Précurseur selon la revendication 1, dans lequel le ligand L est choisi parmi le butoxyde tertiaire et l'iso-propoxyde.

3. Précurseur selon l'une des revendications 1 et 2, dans lequel le ligand de formule OCR¹(R²)CH₂X est le 1-méthoxy-2-méthyl-2-propanolate.

4. Précurseur selon la revendication 1, dans lequel le ligand de formule OCR¹(R²)CH₂X est choisi parmi OCH(Me)CH₂OMe, OCEt₂CH₂OMe, OCH(Bu^{t})CH₂OEt, OC(Bu^{t})₂CH₂Oet, OC(Prⁱ)₂CH₂OEt.

5. Précurseur selon la revendication 1 de formule Zr(OBu^{t})₂(mmp)₂.

6. Précurseur selon la revendication 1 de formule Hf(OBu^{t})₂(mmp)₂.

7. Méthode de fabrication de précurseurs de Ti, Zr et Hf selon la revendication 1 pour utilisation dans les techniques de MOCVD comprenant la réaction de HOCR¹(R²)CH₂X, dans lequel R¹, R², et X sont tels que définis ci-dessus, avec l'alcoxyde de métal correspondant en des proportions molaires appropriées.

8. Précurseur pour utilisation dans les techniques de MOCVD ayant la formule générale suivante
La[OCR¹(R²)CH₂X]₃
dans laquelle R¹ est H ou un groupe alkyle, R² est un groupe alkyle facultativement substitué et X est choisi parmi OR et NR₂, dans lesquels R est un groupe alkyle ou un groupe alkyle substitué.

9. Précurseur selon la revendication 8, dans lequel le ligand est le 1-méthoxy-2-méthyl-2-propanolate [OCMe₂CH₂OMe].

10. Précurseur selon la revendication 8, dans lequel le ligand est choisi parmi OCH(Me)CH₂OMe, OCEt₂CH₂OMe, OCH(Bu^{t})CH₂OEt, OC(Bu^{t})₂CH₂OEt, OC(Prⁱ)₂CH₂OEt, OCH(Bu^{t})CH₂NEt₂, OC(Prⁱ)₂CH₂OC₂H₄OMe et OC(Bu^{t})(CH₂OPrⁱ)₂.

11. Précurseur de formule La[mmp]₃.

12. Méthode de fabrication de précurseurs selon la revendication 8, comprenant la réaction de HOCR¹(R²)CH₂X avec La{N(SiMe₃)₂}₃ en des proportions molaires appropriées.

13. Méthode de dépôt de couches ou de films d'oxydes simples ou mixtes par une MOCVD classique, dans laquelle le précurseur est contenu dans un barboteur organométallique, ou par une MOCVD à injection liquide, dans laquelle le précurseur est dissous dans un solvant organique inerte approprié, puis évaporé en phase vapeur en utilisant un évaporateur chauffé, dans laquelle au moins l'un des précurseurs est tel que défini selon l'une quelconque des revendications 1 à 6 ou 8 à 11.
